# EUROPEAN PATENT APPLICATION

(11) **EP 3 879 883 A1**
(43) Date of publication of application: **15.09.2021**
(21) Application number: 18941867.6
(22) Date of filing: 30.11.2018
(51) Int. Cl.: H04W 48/16

(54) **RANDOM ACCESS PROCESS SELECTION METHOD AND APPARATUS, CHIP, AND COMPUTER PROGRAM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2018/118628
(87) International publication number: WO 2020/107416

(57) **Abstract**

Disclosed are a random access process selecting method and apparatus, a chip, and a computer program. The method comprises: when a system is configured with a first random access process and a second random access process simultaneously, a terminal device selects to initiate a random access by means of the first random access process or the second random access process on the basis of a predetermined condition. By applying the solution of the present application, the efficiency and the like of the random access process can be improved.

## Description

### TECHNICAL FIELD

The present disclosure relates to network technology, and particularly to a method and device for selecting a random access procedure, a chip, and a computer program.

### BACKGROUND

After a cell search process is performed, a terminal device has acquired downlink synchronization with a cell, and thus can receive downlink data, but the terminal cannot perform uplink transmission until uplink synchronization with the cell is acquired.

Through a random access procedure, the terminal device can establish a connection with the cell and acquire the uplink synchronization. The random access procedure is mainly used for: (1) acquiring the uplink synchronization; and (2) assigning a unique Cell Radio Network Temporary Identifier (C-RNTI) for the terminal device.

The random access procedure is triggered by one of the following six events generally.
(1) A radio connection, which is established at initial access, and during which the terminal device transforms from an RRC_IDLE state to an RRC_CONNECTED state.
(2) RRC (radio resource control) Connection Re-establishment procedure, which is used for the terminal device to re-establish a radio connection after radio link failure, and the RRC refers to radio resource control.
(3) Handover during which the terminal device needs to establish uplink synchronization with a new cell.
(4) In the RRC_CONNECTED state, when for example ACK/NACK needs to be replied after downlink data arrives, uplink is in "out-of- synchronization" state.
(5) In the RRC CONNECTED state, when for example a measurement report needs to reported or user data is transmitted after uplink data arrives, the uplink is in the "out-of-synchronization" state or there is no available Physical Uplink Control Channel (PUCCH) resource used for Scheduling Request (SR) transmission. In this case, the terminal device in the uplink synchronization state is allowed to use a Random Access Channel (RACH) to instead the function of the SR.
(6) In the RRC_CONNECTED state, a timing advance is required in order to position the terminal device.

In the 3rd Generation Partnership Project (3GPP) protocol, a four-step random access procedure is supported. In order to shorten latency of the random access procedure, it has been proposed that the four-step random access procedure can be compressed into a two-step random access procedure at present. Therefore, the problem of how to reasonably select the random access procedure used by the terminal device is involved, and there is no effective implementation for this problem.

### SUMMARY

In view of this, the embodiments of the present disclosure provide a method and device for selecting a random access procedure, a chip, and a computer program.

In a first aspect, a method for selecting a random access procedure is provided, which may include the following operation.

When both a first random access procedure and a second random access procedure are configured for a system, a terminal device selects, based on a preset condition, to initiate a random access through the first random access procedure or the second random access.

In a second aspect, a method for selecting a random access procedure is provided, which may include the following operation.

A network side configures both a first random access procedure and a second random access procedure for a terminal device, and when the terminal device is to initiate a random access, the terminal device selects, based on a preset condition, to initiate a random access through the first random access procedure or the second random access procedure.

In a third aspect, a terminal device is provided, which is used to execute the method in the above-described first aspect or various implementations thereof.

Specifically, the terminal device includes functional modules executing the method in the above-described first aspect or various implementations thereof.

In a fourth aspect, a network device is provided, which is used to execute the method in the above-described second aspect or various implementations thereof.

Specifically, the network device includes functional modules executing the method in the above-described second aspect or in various implementations thereof.

In a fifth aspect, a communication device is provided, which includes a processor and a memory. The memory is configured to store computer programs, and the processor is configured to invoke and run the computer programs stored in the memory to execute the method in any one of the above-described first to second aspects or various implementations thereof.

In a sixth aspect, a chip is provided, which is configured to implement the methods in any one of the above-described first to second aspects or various implementations thereof.

Specifically, the chip includes a processor. The processor is configured to invoke and run the computer programs from a memory, so that a device installing with the chip executes the methods of any one of the above-described first aspect to second aspect or various implementations thereof.

In a seventh aspect, a computer-readable storage medium for storing a computer program is provided, and the computer program enables a computer to execute the methods of any one of the above-described first to second aspects or various implementations thereof.

In an eighth aspect, a computer program product is provided, which includes computer program instructions, and the computer program instructions enable a computer to execute the methods of any one of the above-described first to second aspects or various implementations thereof.

In a ninth aspect, a computer program is provided, which, when running on a computer, enables a computer to execute the methods of any one of the above-described first to second aspects or various implementations thereof.

Based on the above-mentioned contents, with the solution described in this disclosure,when both the first random access procedure and the second random access procedure are configured for the system, the terminal device selects, based on a preset condition, to initiate a random access through the first random access procedure or the second random access, so that a reasonable random access procedure can be selected based on characteristics of different random access procedures, thereby improving efficiency of the random access procedure, and the like.

### BRIEF DESCRIPTION OF THE DRAWINGS

FIG. 1 is a schematic diagram of architecture of a communication system according to an embodiment of the present disclosure.
FIG. 2 is a schematic diagram of a four-step random access procedure according to an embodiment of the present disclosure.
FIG. 3 is a schematic structural diagram of a terminal device 300 according to an embodiment of the present disclosure.
FIG. 4 is a schematic structural diagram of a network device 400 according to an embodiment of the present disclosure.
FIG. 5 is a schematic structural diagram of a communication device 600 according to an embodiment of the present disclosure.
FIG. 6 is a schematic structural diagram of a chip 700 according to an embodiment of the present disclosure.
FIG. 7 is a schematic block diagram of a communication system 800 according to an embodiment of the present disclosure.

### DETAILED DESCRIPTION

The technical solution in the embodiments of the present disclosure will be described with reference to the accompanying drawings of the embodiments of the present disclosure. It is apparent that the described embodiments are a part rather than all of the embodiments. Based on the embodiments in the present disclosure, all other embodiments obtained by a person skilled in the art without creative effort fall within the protection scope of the present disclosure.

The technical solutions of the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD), a Universal Mobile Telecommunication System (UMTS), a Worldwide Interoperability for Microwave Access (WiMAX) communication system, a 5G system and the like.

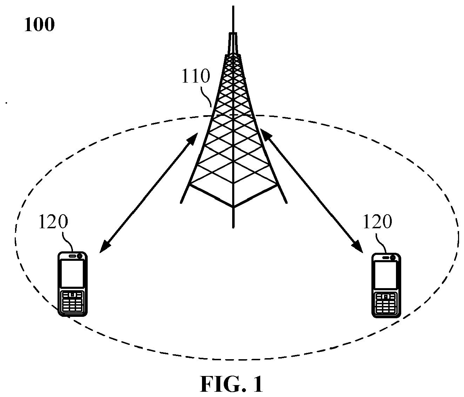

Exemplarily, FIG. 1 is a schematic diagram of of architecture a communication system according to the embodiments of the present application. The communication system 100 may include a network device 110, which may be a device communicating with a terminal device 120 (also referred to as a communication terminal, terminal). The network device 110 may provide communication coverage for a specific geographic area and may communicate with terminal devices located within the coverage area. Optionally, the network device 110 may be a Base Transceiver Station (BTS) in a GSM system or a CDMA system, a NodeB (NB) in a WCDMA system, an evolved Evolutional Node B (eNB or eNodeB) in an LTE system, or a radio controller in a Cloud Radio Access Network (CRAN), or the network device may be a mobile switching center, a relay station, an access point, a in-vehicle device, a wearable device, a hub, a switch, a bridge, a router, a network-side device in a 5G network, a network device in a future evolved Public Land Mobile Network (PLMN), and the like.

The communication system 100 further includes at least one terminal device 120 located within the coverage of the network device 110. The "terminal device" used herein includes but is not limited to be connected via wired lines, such as Public Switched Telephone Networks (PSTN), Digital Subscriber Line (DSL), digital cables, direct cable connections; and/or another data connection/network; and/or via a wireless interface, such as for a cellular network, a Wireless Local Area Network (WLAN), a digital television network such as DVB-H network, a satellite network, a AM-FM broadcast transmitter; and/or means of another terminal device configured to receive/transmit communication signals; and/or Internet of Things (IoT) devices. A terminal device configured to communicate via a wireless interface may be referred to as a "wireless communication terminal", "wireless terminal" or "mobile terminal". Example of mobile terminals include, but are not limited to, satellite or cellular telephones; a Personal Communications System (PCS) terminal that may combine a cellular radio telephone with data processing and data communications capabilities, a Personal Digital Assistant (PDA) that can include a radio telephone, a pager, Internet/intranet access, a Web browser, memo pad, calendar and/or Global Positioning System (GPS) receiver; and a conventional laptop and/or palmtop receivers or other electronic devices including radio telephone transceivers. The terminal device may be referred to an access terminal, a User Equipment (UE), a subscriber unit, a subscriber station, a mobile station, a mobile platform, a remote station, a remote terminal, a mobile device, a user terminal, a terminal, a wireless communication device, a user agent or a user device. The access terminal may be a cellular telephone, a cordless telephone, a Session Initiation Protocol (SIP) telephone, a Wireless Local Loop (WLL) station, a Personal Digital Assistant (PDA), a handheld device with wireless communication functions, a computing device or other processing device connected to a wireless modem, an in-vehicle device, a wearable device, a terminal device in a 5G network, a terminal device in a future evolved PLMN, or the like.

Optionally, Device to Device (D2D) communication may be performed between the terminal devices 120.

Optionally, the 5G system or 5G network may also be referred to as an New Radio (NR) system or NR network.

The technical solutions of the embodiments of the present disclosure may be applied to an unlicensed spectrum, or may be applied to a licensed spectrum, which is not limited in the embodiments of the present disclosure.

FIG. 1 illustrates one network device and two terminal devices. Optionally, the communication system 100 may include multiple network devices and another number of terminal devices may be included within the coverage of each network device, which is not limited by the embodiments of the present disclosure.

Optionally, the communication system 100 may further include other network entity such as a network controller or a mobility management entity, which is not limited in the embodiments of the present disclosure.

It will be appreciated that a device with communication function in the network/system in the embodiments of the present disclosure may be referred to as a communication device. Taking the communication system 100 shown in FIG. 1 as an example, the communication device may include a network device 110 and a terminal device 120 with the communication function, and the network device 110 and the terminal device 120 may be specific above-described devices, and details are not described herein. The communication device may also include other devices in the communication system 100, for example, other network entity such as a network controller or a mobility management entity, which is not limited in the embodiments of the present disclosure.

It will be appreciated that terms "system" and "network" are used interchangeably herein. Term "and/or" as used herein, is merely an association relationship describing associated objects and means that there may be three relationships, e.g., A and/or B, which may mean that A alone, both A and B, and B alone. In addition, the character "/" herein generally indicates that there is an "or" relationship between the associated objects.

In a method for selecting a random access procedure provided by the embodiment of the present disclosure, when both a first random access procedure and a second random access procedure are configured for a system, a terminal device selects, based on a preset condition, to initiate a random access through the first random access procedure or the second random access procedure.

The first random access procedure may include a two-step random access procedure, and the second random access procedure may include a four-step random access procedure.

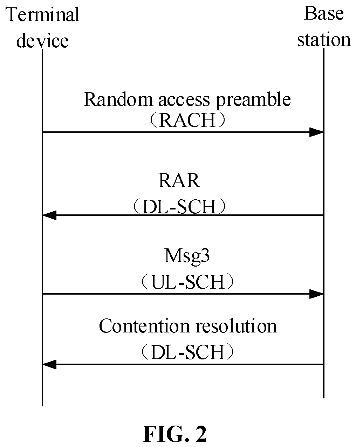

FIG. 2 is a schematic diagram of a four-step random access procedure according to the embodiments of the present disclosure. As shown in FIG. 2, the following operation 1) to operation 4) are included, which may be referred to as Msg1 to Msg4, respectively.

At operation 1, a terminal device transmits a preamble.

The terminal device transmits a random access preamble to a base station (eNodeB) to notify the eNodeB that there is a random access request, so that the eNodeB can estimate a transmission latency between the eNodeB and the terminal device, and calibrate uplink timing based on the transmission latency.

At operation 2, the eNodeB transmits a random access response (RAR).

After transmitting the preamble, the terminal device monitors a physical downlink control channel (PDCCH) within an RA response window (RAR window) to receive the RAR corresponding to the Radom Access-radio network temporary identity (RA-RNTI). If the RAR returned by the eNodeB is not received within the RAR window, it is considered that the random access procedure is failed.

When an RAR (decoded by using the above-described RA-RNTI) is received successfully by the terminal device, and a preamble index in the RAR is the same as a preamble index transmitted by the terminal device, it is considered that the RAR is successfully received, and the terminal device may stop monitoring the RAR

One RAR message may include response messages to multiple users which transmit the preamble, and the response message to each user may include a random access preamble identity (RAPID) used by the user, resource allocation information of the Msg3, timing advance (TA) adjustment information, temporary C-RNTI (TC-RNTI), etc. In New Radio (NR) standard, the RAR message is scheduled by using downlink control information (DCI) format 1-0, and the corresponding PDCCH is scrambled by using the RA-RNTI.

At operation 3, the terminal device transmits Msg3.

Corresponding to a triggering event of the random access, the information carried in the Msg3 includes as follows.

In response to initial access, Msg3 is an RRC connection request transmitted on a common control channel (CCCH), and at least carries identification information of a non-access stratum (NAS) terminal device.

In response to RRC connection re-establishment, Msg3 is an RRC connection re-establishment request transmitted on a CCCH, and does not carry any NAS message.

In response to handover, Msg3 is an encrypted and integrity-protected RRC handover confirm transmitted on a dedicated control channel (DCCH), and includes the C-RNTI of the terminal device, and also carries a buffer status report (BSR) if possible.

For other triggering events, Msg3 at least carries the C-RNTI.

In uplink transmission, specific information such as the C-RNTI of the terminal device is generally used to scramble on uplink shared channel (UL-SCH) data. But the contention has not been resolved at this time, the scrambling can be performed only by the TC-RNT, rather than based on the C-RNTI, that is, the Msg3 only uses the TC-RNTI for scrambling.

At operation 4, the eNodeB transmits contention resolution information.

At operation 3), the terminal device will carry its own unique identifier, such as the C-RNTI, in the Msg3. In a contention resolution mechanism, the eNodeB may carry an unique identifier in the Msg4 to designate a winning terminal device, while other terminal devices which not win in the contention resolution will re-initiate a random access. The PDCCH of the Msg4 uses the TC-RNTI for scrambling.

In order to shorten the latency of the random access procedure, it has been proposed currently that the conventional four-step random access procedure can be compressed into a two-step random access procedure, and the basic idea is to include a new Msgl transmitted by the terminal device and a new Msg2 responded by the network side.

One possible method is that the new Msg1 includes the preamble and uplink data portion. The uplink data portion carries identification information of the terminal device and a reason for the RRC request (i.e., the content of the Msg3 in the four-step random access procedure). The new Msg2 includes the contention resolution information, TA information, C-RNTI allocation information, etc.. That is, the new Msg2 includes a set of the respective partial information of the Msg2 and the Msg4 information in the four-step random access procedure.

In the two-step random access procedure, unlike the Msg2 in the four-step random access procedure which includes the RAR response messages of multiple users, the new Msg2 carries contention resolution information (information related to the terminal device identification transmitted by the terminal device in the new Msgl) transmitted by a single user, C-RNTI assignment information, TA information, and may also include RRC establishment information, and the like.

In the two-step random access procedure, the latency of random access can be effectively shortened by transmitting the preamble and the data portion together. However, in some cases, such as channel quality is poor, or other users which are also initiating random access cause mutual interference, the two-step random access procedure may be less efficient. This is because, for the terminal device, each transmission for a new Msg1 means that both the preamble and the data portion are transmitted, and power consumption of such transmission is higher than that of transmission for only the preamble in the first step of the conventional four-step random access. Therefore, it is necessary to make some limit on selecting the random access procedure by the terminal device.

In this embodiment, when both the two-step random access procedure and the four-step random access procedure are configured for a system, a terminal device selects, based on a preset condition, to initiate a random access through the two-step random access procedure or the four-step random access procedure.

The preset condition includes one or any combination of: a measurement result of a reference signal received power (RSRP), a measurement result of a reference signal received quality (RSRQ), a measurement result of a reference signal-signal to interference plus noise ratio (RS-SINR), a traffic quality of service (QoS) requirement of the terminal device, an operating frequency band of the terminal device, an access priority of the terminal device, and the like. The traffic QoS requirement of the terminal device includes a traffic latency requirement of the terminal device.

The terminal device may acquire at least one of the measurement result of the RSRP, the measurement result of the RSRQ or the measurement result of the RS-SINR based on a measurement for a primary cell (Pcell), a primary secondary cell (Pscell) or a target handover cell.

When the preset condition is the measurement result of the RSRP, when the measurement result of the RSRP is greater than a preset first threshold value, the two-step random access procedure can be selected to initiate a random access. Otherwise, the four-step random access procedure can be selected to initiate a random access.

When the preset condition is the measurement result of the RSRQ, when the measurement result of the RSRQ is greater than a preset second threshold value, the two-step random access procedure can be selected to initiate a random access. Otherwise, the four-step random access procedure can be selected to initiate a random access.

When the preset condition is the measurement result of the RS-SINR, when the measurement result of the RS-SINR is greater than a preset third threshold value, the two-step random access procedure can be selected to initiate a random access. Otherwise, the four-step random access procedure can be selected to initiate a random access.

The first threshold value, the second threshold value and the third threshold value are channel quality thresholds of the terminal device. A better channel quality is beneficial for rapid success of the two-step random access procedure, so as to take advantage of efficiency of the two-step random access procedure. Therefore, when the measurement result of the RSRP is greater than the first threshold value, the measurement result of the RSRQ is greater than the second threshold value or the measurement result of the RS-SINR is greater than the third threshold value, the two-step random access procedure can be selected to initiate a random access. When the measurement result of the RSRP is not greater than the first threshold value, the measurement result of the RSRQ is not greater than the second threshold value or the measurement result of the RS-SINR is not greater than the third threshold value, the four-step random access procedure can be selected to initiate a random access.

When the preset condition is the traffic latency requirement of the terminal device, when the traffic latency requirement of the terminal device is less than a preset fourth threshold value, the two-step random access procedure can be selected to initiate a random access. When the traffic latency requirement of the terminal device is not less than the preset fourth threshold value, the four-step random access procedure can be selected to initiate a random access.

The traffic latency requirement of the terminal device is considered based on the fourth threshold value. Based on the characteristics of the two-step random access procedure, when the latency requirement is high, the two-step random access procedure can be selected to initiate a random access. When latency requirement is not high, the four-step random access procedure can be selected to initiate a random access.

When the preset condition is the operating frequency band of the terminal device, when the operating frequency band of the terminal device is an unlicensed frequency band, the two-step random access procedure can be selected to initiate a random access. When the operating frequency band of the terminal device is a licensed frequency band, the four-step random access procedure can be selected to initiate a random access.

When the operating frequency band of the terminal device is the unlicensed frequency band, the two-step random access can reduce the channel monitoring requirement of the random access procedure and improve the access efficiency on the unlicensed frequency band.

When the preset condition is the access priority of the terminal device, when the access priority of the terminal device is greater than a preset fifth threshold value, the two-step random access procedure can be selected to initiate a random access. Otherwise, the four-step random access procedure can be selected to initiate a random access.

It is considered based on the fifth threshold value that the two-step random access procedure is preferentially used for the terminal device having the high access priority, so that user experience of the terminal device having the high access priority can be preferentially guaranteed.

The above-described preset conditions may be used in combination. For example, the preset condition includes both the measurement result of the RSRP and the measurement result of the RS-SINR, when the measurement result of the RSRP is greater than the first threshold value and the measurement result of the RS-SINR is greater than the third threshold value, the two-step random access procedure can be selected to initiate a random access. When any one of the measurement result of the RSRP and the measurement result of the RS-SINR is greater than the corresponding threshold value, the two-step random access procedure can be selected to initiate a random access, and the specific implementation is not limited.

The first threshold value, the second threshold value, the third threshold value, the fourth threshold value, and the fifth threshold value may be notified to the terminal device by a network side through a system message or radio resource control RRC signaling, or may be agreed upon in advance between the terminal device and the network side.

The solution described in the present disclosure is described above from a terminal device side. For a network side, a network side configures both a first random access procedure and a second random access procedure for a terminal device, such that when the terminal device is to initiate a random access, the terminal device selects, based on a preset condition, to initiate a random access through the first random access procedure or the second random access procedure.

The first random access procedure may include a two-step random access procedure, and the second random access procedure may include a four-step random access procedure.

The preset condition includes one or any combination of: a measurement result of a RSRP, a measurement result of a RSRQ, a measurement result of a RS-SINR, a traffic QoS requirement of the terminal device, an operating frequency band of the terminal device and an access priority of the terminal device, and the like.

When the preset condition includes at least one of: the measurement result of the RSRP, the measurement result of the RSRQ, the measurement result of the RS-SINR, the traffic QoS requirement of the terminal device or the access priority of the terminal device, the network side transmits a threshold value corresponding to the preset condition to the terminal device through a system message or RRC signaling, such that the terminal device selects, based on the threshold value, to initiate a random access through the first random access procedure or the second random access procedure. For the specific implementation, reference may be made to the aforementioned related description, and details are not described again.

In summary, with the solution described in the embodiments of the present disclosure, a reasonable random access procedure can be selected based on characteristics of different random access procedures, thereby improving efficiency of the random access procedure, and the like.

The foregoing is the description of the method embodiments, and the solution described herein is further described below by means of a device embodiment.

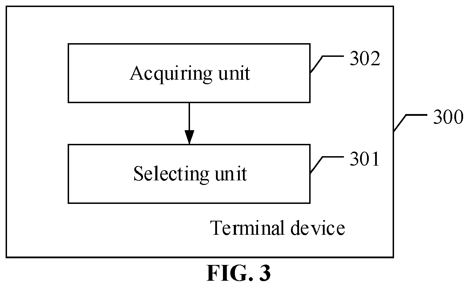

FIG. 3 is a schematic structural diagram of a terminal device 300 according to the embodiments of the present disclosure. As shown in FIG. 3, the terminal device includes a selecting unit 301.

The selecting unit 301 is configured to, when both a first random access procedure and a second random access procedure are configured for a system, based on a preset condition, select to initiate a random access through the first random access procedure or the second random access procedure.

The first random access procedure may include a two-step random access procedure, and the second random access procedure may include a four-step random access procedure.

The preset condition includes one or any combination of: a measurement result of a RSRP, a measurement result of a RSRQ, a measurement result of a RS-SINR, a traffic QoS requirement of the terminal device, an operating frequency band of the terminal device, an access priority of the terminal device, and the like. The traffic QoS requirement of the terminal device may include a traffic latency requirement of the terminal device.

Accordingly, as shown in FIG. 3, the terminal device may further include an acquiring unit 302, which is configured to, based on a measurement for a Pcell, a Pscell or a target handover cell, acquire at least one of the measurement result of the RSRP or the measurement result of the RSRQ or the measurement result of the RS-SINR

When the preset condition is the measurement result of the RSRP, the selecting unit 301 is configured to select to initiate a random access through the two-step random access procedure when the measurement result of the RSRP is greater than a preset first threshold value, otherwise select to initiate a random access through the four-step random access procedure.

When the preset condition is the measurement result of the RSRQ, the selecting unit 301 is configured to select to initiate a random access through the two-step random access procedure when the measurement result of the RSRQ is greater than a preset second threshold value, otherwise select to initiate a random access through the four-step random access procedure.

When the preset condition is the measurement result of the RS-SINR, the selecting unit 301 is configured to select to initiate a random access through the two-step random access procedure when the measurement result of the RS-SINR is greater than a preset third threshold value, otherwise select to initiate a random access through the four-step random access procedure.

When the preset condition is the traffic latency requirement of the terminal device, the selecting unit 301 is configured to select to initiate a random access through the two-step random access procedure when the traffic latency requirement of the terminal device is less than a preset fourth threshold value, or select to initiate a random access through the four-step random access procedure when the traffic latency requirement of the terminal device is not less than the preset fourth threshold value.

When the preset condition is the operating frequency band of the terminal device, the selecting unit 301 is configured to select to initiate a random access through the two-step random access procedure when the operating frequency band of the terminal device is an unlicensed frequency band, or select to initiate a random access through the four-step random access procedure when the operating frequency band of the terminal device is the licensed frequency band.

When the preset condition is the access priority of the terminal device, the selecting unit 301 is configured to select to initiate a random access through the two-step random access procedure when the access priority of the terminal device is greater than a preset fifth threshold value, otherwise select to initiate a random access through the four-step random access procedure.

The above-described preset conditions may be used in combination. For example, the preset condition includes both the measurement result of the RSRP and the measurement result of the RS-SINR, when the measurement result of the RSRP is greater than the first threshold value and the measurement result of the RS-SINR is greater than the third threshold value, the two-step random access procedure is selected to initiate a random access, When any one of the measurement result of the RSRP and the measurement result of the RS-SINR is greater than the corresponding threshold value, the two-step random access procedure is selected to initiate a random access, and the specific implementation is not limited.

The first threshold value, the second threshold value, the third threshold value, the fourth threshold value, and the fifth threshold value may be notified to the acquiring unit 302 by a network side through a system message or RRC signaling, and the acquiring unit 302 provides to the selecting unit 301, or may be agreed upon in advance between the terminal device and the network side.

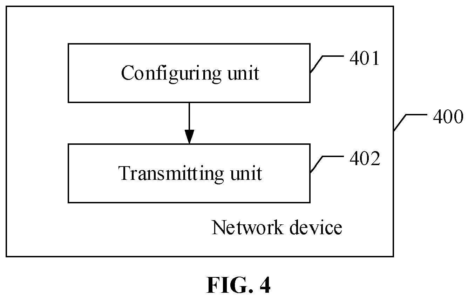

FIG. 4 is a schematic structural diagram of a network device 400 according to the embodiments of the present disclosure. As shown in FIG. 4, the network device 400 includes a configuration unit 401.

The configuring unit 401 is configured to configure both a first random access procedure and a second random access procedure for a terminal device, such that when the terminal device is to initiate a random access, the terminal device selects, based on a preset condition, to initiate a random access through the first random access procedure or the second random access procedure.

The first random access procedure may include a two-step random access procedure, and the second random access procedure may include a four-step random access procedure.

The preset condition includes one or any combination of: a measurement result of a RSRP, a measurement result of a RSRQ, a measurement result of a RS-SINR, a traffic QoS requirement of the terminal device, an operating frequency band of the terminal device, an access priority of the terminal device, and the like. The traffic QoS requirement of the terminal device includes a traffic latency requirement of the terminal device.

The network device shown in FIG. 4 may further include a transmitting unit 402, which is configured to, when the preset condition includes at least one of: the measurement result of the RSRP, the measurement result of the RSRQ, the measurement result of the RS-SINR, the traffic QoS requirement of the terminal device and the access priority of the terminal device, transmit a threshold value corresponding to the preset condition to the terminal device through a system message or RRC signaling, such that the terminal device selects, based on the threshold value, to initiate a random access through the first random access procedure or the second random access procedure.

Regarding the detailed operation flows of the device embodiments described in FIG. 3 and FIG.4, reference may be made to the related description in the method embodiments above-described, and repeatedly description is omitted.

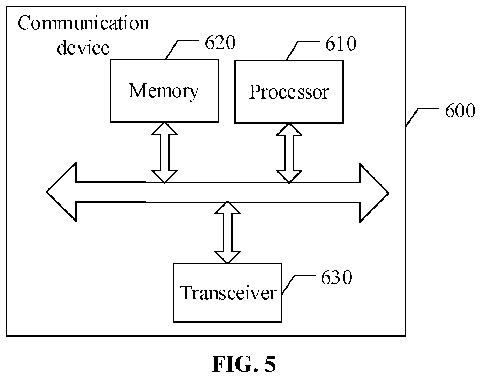

FIG. 5 is a schematic structural diagram of a communication device 600 provided by the embodiments of the present disclosure. The communication device 600 shown in FIG. 5 includes a processor 610. The processor 610 can invoke and run computer programs from a memory 620 to implement the method in the embodiments of the present disclosure.

Optionally, as shown in FIG. 5, the communication device 600 may also include a memory 620. The processor 610 may invoke and run computer programs from the memory 620 to implement the method in the embodiments of the present disclosure.

The memory 620 may be a separate device independent of the processor 610, or may be integrated in the processor 610.

Optionally, as shown in FIG. 5, the communication device 600 may also include a transceiver 630, the processor 610 may control the transceiver 630 to communicate with other devices. Specifically, the processor may control the transceiver to transmit information or data to other devices, or receive information or data transmitted by other devices.

The transceiver 630 may include a transmitter and a receiver. The transceiver 630 may further include an antenna(s), the number of which may be one or more.

Optionally, the communication device 600 may be a network device of the embodiments of the present disclosure, and the communication device 600 may implement the respective operations implemented by the network device in each method of the embodiments of the present disclosure. For the sake of brevity, it will not be elaborated here.

Optionally, the communication device 600 may be a mobile terminal/terminal device according to the embodiments of the present disclosure, and the communication device 600 may implement the respective operations implemented by the mobile terminal/terminal device in each method according to the embodiments of the present disclosure. For the sake of brevity, details are not described herein.

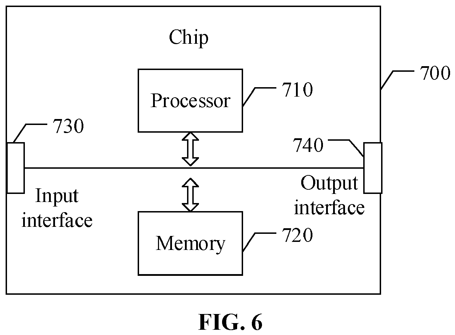

FIG. 6 is a schematic structural diagram of a chip 700 according to the embodiments of the present disclosure. The chip 700 illustrated in FIG. 6 includes a processor 710. The processor 710 can invoke and run computer programs from a memory to implement the method in the embodiments of the present disclosure.

Optionally, as shown in FIG. 6, the chip 700 may also include a memory 720. The processor 710 may invoke and run computer programs from the memory 720 to implement the method in the embodiments of the present disclosure.

The memory 720 may be a separate device independent of the processor 710, or may be integrated in the processor 710.

Optionally, the chip 700 may also include an input interface 730. The processor 710 may control the input interface 730 to communicate with other devices or chips. Specifically, the processor may control the input interface to acquire information or data transmitted by other devices or chips.

Optionally, the chip 700 may also include an output interface 740. The processor 710 may control the output interface 740 to communicate with other devices or chips. Specifically, the processor may control the output interface to output information or data to other devices or chips.

Optionally, the chip may be applied to the network device in the embodiments of the present disclosure, and the chip can implement the respective operations implemented by the network device in each method of the embodiments of the present disclosure. For the sake of brevity, details are not described herein.

Optionally, the chip can be applied to the mobile terminal/terminal device in the embodiments of the present disclosure, and the chip can implement the respective operations implemented by the mobile terminal/terminal device in each method of the embodiments of the present disclosure. For the sake of brevity, details are not described herein.

It should be understood that the chips mentioned in the embodiments of the present disclosure may also be referred to as system level chips, system chips, chip systems, on-chip system chip, or the like.

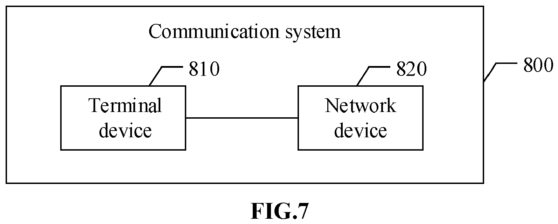

FIG. 7 is a schematic block diagram of a communication system 800 provided by the embodiments of the present disclosure. As shown in FIG. 7, the communication system 800 includes a terminal device 810 and a network device 820.

The terminal device 810 may be used to implement the respective functions implemented by the terminal device in the above-mentioned method, and the network device 820 may be used to implement the respective functions implemented by the network device in the above-mentioned method. For the sake of brevity, details are not described herein.

It will be appreciated that the processor of the embodiments of the present disclosure may be an integrated circuit chip having signal processing capability. In the implementation, the operations of the above-described method embodiments may be accomplished by integrated logic circuits of hardware in the processor or instructions in the form of software. The above-mentioned processor may be a general purpose processor, a Digital Signal Processor (DSP), an Application Specific Integrated Circuit (ASIC), a Field Programmable Gate Array (FPGA) or other programmable logic device, a discrete gate or a transistor logic device and a discrete hardware component. The methods, operations, and logical block diagrams disclosed in the embodiments of the present disclosure may be implemented or performed. The general-purpose processor may be a microprocessor or the processor may be any conventional processor or the like. The operations of the method disclosed in connection with the embodiments of the present disclosure can be directly implemented by a hardware decoding processor, or by a combination of hardware and software modules in the decoding processor. The software module may be located in a storage medium mature in the art such as a random access memory, a flash memory, a read-only memory, a programmable read-only memory, an electrically erasable programmable memory, a register, or the like. The storage medium is located in a memory, and the processor reads information in the memory and performs the operations of the above method in conjunction with hardware thereof.

It will be appreciated that the memory in the embodiments of the present disclosure may be volatile memory or non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, and not limitation, many forms of RAM are available, such as a Static RAM (SRAM), a Dynamic RAM (DRAM), Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

The embodiments of the present disclosure further provide a computer readable storage medium for storing computer programs.

Optionally, the computer-readable storage medium may be applied to the network device in the embodiments of the present disclosure, and the computer programs causes the computer to execute the respective operations implemented by the network device in each method of the embodiments of the present disclosure. For the sake of brevity, details are not described herein.

Optionally, the computer-readable storage medium may be applied to the mobile terminal/terminal device in the embodiments of the present disclosure, and the computer programs causes the computer to execute the respective operations implemented by the mobile terminal/terminal device in each method of the embodiments of the present disclosure. For the sake of brevity, details are not described herein.

The embodiments of the present disclosure also provide a computer program product including computer program instructions.

Optionally, the computer program product may be applied to the network device in the embodiments of the present disclosure, and the computer program instructions cause the computer to execute the respective operations implemented by the network device in each method of the embodiments of the present disclosure. For the sake of brevity, details are not described herein.

Optionally, the computer program product may be applied to the mobile terminal/terminal device in the embodiments of the present disclosure, and the computer program instructions cause the computer to execute the respective operations implemented by the mobile terminal/terminal device in each method of the embodiments of the present disclosure. For the sake of brevity, details are not described herein.

The embodiments of the present disclosure also provide a computer program.

Optionally, the computer program may be applied to the network device in the embodiments of the present disclosure. The computer program, when being run on a computer, causes the computer to execute the respective operations implemented by the network device in each method of the embodiments of the present disclosure. For the sake of brevity, details are not described herein.

Optionally, the computer program may be applied to the mobile terminal/terminal device in the embodiments of the present disclosure. The computer program, when being run on a computer, causes the computer to execute the respective operations implemented by the mobile terminal/terminal device in each method of the embodiments of the present disclosure. For the sake of brevity, details are not described herein.

Those of ordinary skill in the art will recognize that the units and algorithm operations of the examples described in connection with the embodiments disclosed herein can be implemented in electronic hardware, or a combination of computer software and electronic hardware. Whether these functions are performed in hardware or software depends on the particular application and design constraint conditions of the technical solution. The skilled person may use different methods to implement the described functions for each particular application, but such implementation should not be considered to go beyond the scope of the present disclosure.

It will be apparent to those skilled in the art that for the convenience and brevity of the description, reference may be made to the corresponding processes in the foregoing method embodiments for the specific operations processes of the above-described systems, devices and units, and details will not be described herein.

In several embodiments provided by the present disclosure, it should be understood that the disclosed systems, devices, and methods can be realized in other ways. For example, the device embodiments described above are merely illustrative. For example, the division of the unit is merely a logical functional division, and there may be additional division in practice. For example, multiple units or components can be combined or integrated into another system, or some features may be ignored or not performed. On the other hand, the displayed or discussed coupling or direct coupling or communication connection between the units or components may be indirect coupling or communication connection through some interfaces, devices or units, and may be in electrical, mechanical or other form.

The units illustrated as separate elements may or may not be physically separate, and the elements shown as units may or may not be physical units. That is, the units or components may be located at the same location, or may be distributed across multiple network elements. Some or all of the units may be selected according to actual needs to achieve the objectives of the embodiments.

In addition, the functional units in the various embodiments of the present disclosure may be integrated in one processing unit, may be separate physical units. Alternatively, two or more units may be integrated in one unit.

The functions, if implemented as software functional units and sold or used as separate products, may be stored in a computer-readable storage medium. Based on such an understanding, an essential part of the technical solution of the present disclosure or the part of the technical solution that contributes to the prior art or the part of the technical solution can be embodied in the form of a software product, the computer software product is stored in a storage medium and includes instructions for causing a computer device (which may be a personal computer, a server, a network device, or the like) to perform all or part of the operations of the methods described in the various embodiments of the present disclosure. The aforementioned storage medium includes a USB flash drive, a removable hard disk, a Read-Only Memory (ROM), a Random Access Memory (RAM), a magnetic disk, an optical disk or other media that can store program codes.

The foregoing is merely the embodiments of the present disclosure, but the scope of protection of the present disclosure is not limited thereto. Variations or substitutions readily occurring to those skilled in the art within the technical scope of the present disclosure, fall within the scope of protection of the present disclosure. Accordingly, the scope of the present disclosure should conform with the scope of protection of the appended claims.

## Claims

1. A method for selecting a random access procedure, comprising:
when both a first random access procedure and a second random access procedure are configured for a system, selecting, by a terminal device based on a preset condition, to initiate a random access through the first random access procedure or the second random access procedure.

2. The method of claim 1, wherein
the first random access procedure comprises a two-step random access procedure; and
the second random access procedure comprises a four-step random access procedure.

3. The method of claim 2, wherein
the preset condition comprises one or any combination of: a measurement result of a reference signal received power (RSRP); a measurement result of a reference signal received quality (RSRQ); a measurement result of a reference signal-signal to interference plus noise ratio (RS-SINR); a traffic quality of service (QoS) requirement of the terminal device; an operating frequency band of the terminal device; and an access priority of the terminal device.

4. The method of claim 3, wherein
when the preset condition is the measurement result of the RSRP, the selecting, by the terminal device, based on the preset condition, to initiate the random access through the first random access procedure or the second random access procedure comprises:
selecting to initiate the random access through the two-step random access procedure when the measurement result of the RSRP is greater than a preset first threshold value; otherwise, selecting to initiate the random access through the four-step random access procedure.

5. The method of claim 3, wherein
when the preset condition is the measurement result of the RSRQ, the selecting, by the terminal device, based on the preset condition, to initiate the random access through the first random access procedure or the second random access procedure comprises:
selecting to initiate the random access through the two-step random access procedure when the measurement result of the RSRQ is greater than a preset second threshold value; otherwise, selecting to initiate the random access through the four-step random access procedure.

6. The method of claim 3, wherein
when the preset condition is the measurement result of the RS-SINR, the selecting, by the terminal device, based on the preset condition, to initiate the random access through the first random access procedure or the second random access procedure comprises:
selecting to initiate the random access through the two-step random access procedure when the measurement result of the RS-SINR is greater than a preset third threshold value; otherwise, selecting to initiate the random access through the four-step random access procedure.

7. The method of claim 3, wherein
the traffic QoS requirement of the terminal device comprises a traffic latency requirement of the terminal device, and
when the preset condition is the traffic latency requirement of the terminal device, the selecting, by the terminal device, based on the preset condition, to initiate the random access through the first random access procedure or the second random access procedure comprises:
selecting to initiate the random access through the two-step random access procedure when the traffic latency requirement of the terminal device is less than a preset fourth threshold value; otherwise, selecting to initiate the random access through the four-step random access procedure.

8. The method of claim 3, wherein
when the preset condition is the operating frequency band of the terminal device, the selecting, by the terminal device, based on the preset condition, to initiate the random access through the first random access procedure or the second random access procedure comprises:
selecting to initiate the random access through the two-step random access procedure when the operating frequency band of the terminal device is an unlicensed frequency band; otherwise, selecting to initiate the random access through the four-step random access procedure.

9. The method of claim 3, wherein
when the preset condition is the access priority of the terminal device, the selecting, by the terminal device, based on the preset condition, to initiate the random access through the first random access procedure or the second random access procedure comprises:
selecting to initiate the random access through the two-step random access procedure when the access priority of the terminal device is greater than a preset fifth threshold value; otherwise, selecting to initiate the random access through the four-step random access procedure.

10. The method of any one of claims 3 to 9, further comprising:
acquiring, by the terminal device, based on a measurement for a primary cell (Pcell), a primary secondary cell (Pscell) or a target handover cell, at least one of the measurement result of the RSRP, the measurement result of the RSRQ or the measurement result of the RS-SINR.

11. The method of any one of claims 4 to 7 and 9, wherein
the threshold value is notified to the terminal device by a network side through a system message or radio resource control (RRC) signaling; or
the threshold value is agreed upon in advance between the terminal device and the network side.

12. A method for selecting a random access procedure, comprising:
configuring, by a network side, both a first random access procedure and a second random access procedure for a terminal device, such that when the terminal device is to initiate a random access, the terminal device selects, based on a preset condition, to initiate the random access through the first random access procedure or the second random access procedure.

13. The method of claim 12, wherein
the first random access procedure comprises a two-step random access procedure; and
the second random access procedure comprises a four-step random access procedure.

14. The method of claim 13, wherein
the preset condition comprises one or any combination of: a measurement result of a reference signal received power (RSRP); a measurement result of a reference signal received quality (RSRQ); a measurement result of a reference signal-signal to interference plus noise ratio (RS-SINR); a traffic quality of service (QoS) requirement of the terminal device; an operating frequency band of the terminal device; and an access priority of the terminal device.

15. The method of claim 14, further comprising:
when the preset condition comprises at least one of: the measurement result of the RSRP, the measurement result of the RSRQ, the measurement result of the RS-SINR, the traffic QoS requirement of the terminal device or the access priority of the terminal device, transmitting, by the network side, a threshold value corresponding to the preset condition to the terminal device through a system message or radio resource control (RRC) signaling, such that the terminal device selects, based on the threshold value, to initiate the random access through the first random access procedure or the second random access procedure.

16. A terminal device, comprising:
a selecting unit, configured to, when both a first random access procedure and a second random access procedure are configured for a system, select based on a preset condition to initiate a random access through the first random access procedure or the second random access procedure.

17. The terminal device of claim 16, wherein
the first random access procedure comprises a two-step random access procedure; and
the second random access procedure comprises a four-step random access procedure.

18. The terminal device of claim 17, wherein
the preset condition comprises one or any combination of: a measurement result of a reference signal received power (RSRP); a measurement result of a reference signal received quality (RSRQ); a measurement result of a reference signal-signal to interference plus noise ratio (RS-SINR); a traffic quality of service (QoS) requirement of the terminal device; an operating frequency band of the terminal device; and an access priority of the terminal device.

19. The terminal device of claim 18, wherein
when the preset condition is the measurement result of the RSRP, the selecting unit selects to initiate the random access through the two-step random access procedure when the measurement result of the RSRP is greater than a preset first threshold value, otherwise, selects to initiate the random access through the four-step random access procedure.

20. The terminal device of claim 18, wherein
when the preset condition is the measurement result of the RSRQ, the selecting unit selects to initiate the random access through the two-step random access procedure when the measurement result of the RSRQ is greater than a preset second threshold value, otherwise, selects to initiate the random access through the four-step random access procedure.

21. The terminal device of claim 18, wherein
when the preset condition is the measurement result of the RS-SINR, the selecting unit selects to initiate the random access through the two-step random access procedure when the measurement result of the RS-SINR is greater than a preset third threshold value, otherwise, selects to initiate the random access through the four-step random access procedure.

22. The terminal device of claim 18, wherein
the traffic QoS requirement of the terminal device comprises a traffic latency requirement of the terminal device, and
when the preset condition is the traffic latency requirement of the terminal device, the selecting unit selects to initiate the random access through the two-step random access procedure when the traffic latency requirement of the terminal device is less than a preset fourth threshold value, otherwise, selects to initiate the random access through the four-step random access procedure.

23. The terminal device of claim 18, wherein
when the preset condition is the operating frequency band of the terminal device, the selecting unit selects to initiate the random access through the two-step random access procedure when the operating frequency band of the terminal device is an unlicensed frequency band, otherwise, selects to initiate the random access through the four-step random access procedure.

24. The terminal device of claim 18, wherein
when the preset condition is the access priority of the terminal device, the selecting unit selects to: initiate a random access through the two-step random access procedure when the access priority of the terminal device is greater than a preset fifth threshold value; otherwise, selects to initiate a random access through the four-step random access procedure.

25. The terminal device of any one of claims 18 to 24, further comprising an acquiring unit, wherein the acquiring unit is configured to acquire at least one of the measurement result of the RSRP, the measurement result of the RSRQ or the measurement result of the RS-SINR based on a measurement for a primary cell (Pcell), a primary secondary cell (Pscell) or a target handover cell.

26. The terminal device of any one of claims 19 to 22 and 24, wherein
the threshold value is notified to the acquiring unit by a network side through a system message or radio resource control (RRC) signaling; or
the threshold value is agreed upon in advance between the terminal device and a network side.

27. A network device, comprising:
a configuring unit, configured to configure both a first random access procedure and a second random access procedure for a terminal device, such that when the terminal device is to initiate a random access, the terminal device selects, based on a preset condition, to initiate the random access through the first random access procedure or the second random access procedure.

28. The network device of claim 27, wherein
the first random access procedure comprises a two-step random access procedure; and
the second random access procedure comprises a four-step random access procedure.

29. The network device of claim 28, wherein
the preset condition comprises one or any combination of: a measurement result of a reference signal received power (RSRP); a measurement result of a reference signal received quality (RSRQ); a measurement result of a reference signal-signal to interference plus noise ratio (RS-SINR); a traffic quality of service (QoS) requirement of the terminal device; an operating frequency band of the terminal device; and an access priority of the terminal device.

30. The network device of claim 29, further comprising a transmitting unit, wherein the transmitting unit is configured to transmit a threshold value corresponding to the preset condition to the terminal device through a system message or radio resource control (RRC) signaling when the preset condition comprises at least one of the measurement result of the RSRP, the measurement result of the RSRQ, the measurement result of the RS-SINR, the traffic QoS requirement of the terminal device or the access priority of the terminal device, such that the terminal device selects, based on the threshold value, to initiate the random access through the first random access procedure or the second random access procedure.

31. A communication device comprising a processor and a memory having stored thereon a computer program, wherein the processor is configured to invoke and run the computer program stored in the memory to perform the method of any one of claims 1 to 15.

32. A chip comprising a processor, which is configured to invoke and run a computer program from a memory to enable a device installed with the chip to perform the method of any one of claims 1 to 15.

33. A computer-readable storage medium having stored thereon a computer program, which enables a computer to perform the method of any one of claims 1 to 15.

34. A computer program product comprising computer program instructions, which enable a computer to perform the method of any one of claims 1 to 15.

35. A computer program enabling a computer to perform the method of any one of claims 1 to 15.
